# EUROPEAN PATENT SPECIFICATION

(11) **EP 2 746 626 B1**
(45) Date of publication and mention of the grant of the patent: **18.10.2017**
(21) Application number: 12825949.6
(22) Date of filing: 29.05.2012
(51) Int. Cl.: F16J 15/10, F16J 15/02

(54) **SEALING STRUCTURE**
DICHTUNGSSTRUKTUR
STRUCTURE D'ÉTANCHÉITÉ

(30) Priority: 19.08.2011 JP 2011179523
(43) Date of publication of application: 25.06.2014
(73) Proprietor: NOK Corporation, Minato-ku Tokyo 105-8585 (JP)
(72) Inventor: YU Nan, Fujisawa-shi, Kanagawa 251-0042 (JP)
(74) Representative: TBK
(86) International application number: PCT/JP2012/063707
(87) International publication number: WO 2013/027458

(56) References cited:
- EP-A2- 1 143 183
- DE-U1- 29 513 104
- JP-A- 2002 071 024
- JP-A- 2007 198 457
- JP-A- 2008 281 110
- US-A- 5 687 976
- US-A1- 2003 001 343

## Description

### BACKGROUND OF THE INVENTION

### Field of the Invention

The present invention relates to a sealing structure, and more particularly to a sealing structure in which a gasket is installed to an installation groove provided in one member of mutually facing two members, and the gasket is brought into close contact with the other member. The sealing device according to the present invention is employed, for example, in various kinds of machines.

### Description of the Conventional Art

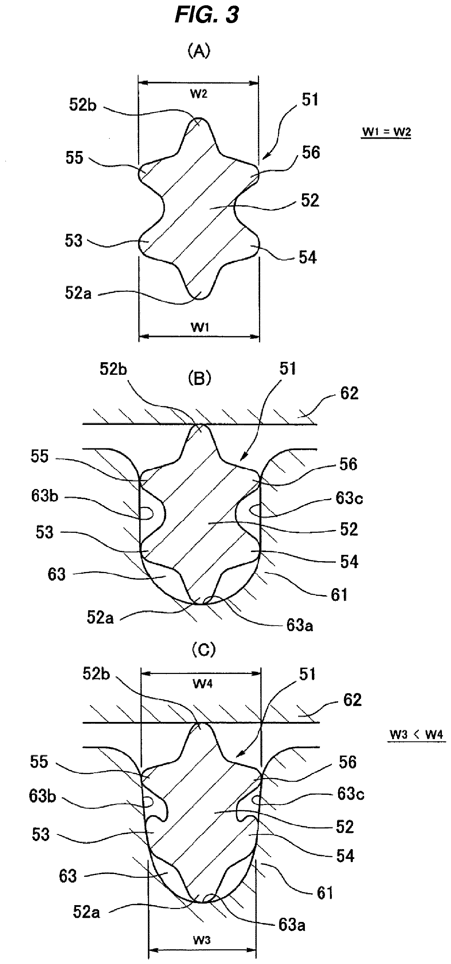

The applicant of the present invention has previously proposed a sealing structure shown in Fig. 3 as a sealing structure in which an installing property of a gasket is stabilized and a manufacturing cost can be reduced, even in the case that a dimensional tolerance of an installation groove is large (refer to patent document 1).

Therefore, in the sealing structure in Fig. 3, a gasket 51 is structured such as to integrally have a gasket main body portion 52, a pair of (a pair of right and left) first and second side surface lips 53 and 54 and a pair of (a pair of right and left) third and fourth side surface lips 55 and 56. In the gasket main body portion 52, one end (a lower end) 52a in a height direction comes into close contact with a groove bottom surface 63a of an installation groove 63 and the other end (an upper end) 52b in the height direction comes into close contact with the other member 62. The first and second side surface lips 53 and 54 come into close contact with groove side surfaces 63b and 63c of the installation groove 63 in the vicinity of a groove bottom portion of the installation groove 63. The third and fourth side surface lips 55 and 56 come into close contact with the groove side surfaces 63b and 63c of the installation groove 63 in the vicinity of a groove opening portion of the installation groove 63. Even in the case that the installation groove 63 is not formed as shown in Fig. 3B, but is formed as shown in Fig. 3C according to a relationship that the dimensional tolerance of the installation groove 63 is large, the first and second side surface lips 53 and 54 in the groove bottom portion side collapse onto the groove opening portion side and an installing property of the gasket 51 can be stabilized.

Since the installation groove 63 has been often formed by a press work or a casting process in recent years, the dimensional tolerance may be often set to be large. In the case that the installation groove 63 is formed by these working methods, the groove side surfaces 63b and 63c of the installation groove 63 do not become parallel as is different from Fig. 3B, but are frequently expanded like a taper shape as shown in Fig. 3C.

In the prior art in Fig. 3, even in the case that the groove side surfaces 63b and 63c of the installation groove 63 are formed as the taper shape as mentioned above, the first and second side surface lips 53 and 54 in the groove bottom portion side collapse onto the groove opening portion side, and it is possible to stabilize the installing property of the gasket 51. However, there is room for improvement yet in the following points.

In other words, in the prior art in Fig. 3, a cross sectional shape of the gasket 51 is formed approximately as a point symmetrical shape. As a result, a gasket width w1 in the first and second side surface lips 53 and 54 in the groove bottom portion side, and a gasket width w2 in the third and fourth side surface lips 55 and 56 in the groove opening portion side are set to the same dimension (w1 = w2), however, in the case that the installation groove 63 is formed by the press work or the casting process as mentioned above, the groove side surfaces 63b and 63c of the installation groove 63 are formed as the taper shape. In other words, it is often the case that a groove width w4 of the installation groove 63 at a position where the third and fourth side surface lips 55 and 56 in the groove opening portion side come into close contact with the installation groove 63 is set to be larger than a groove width w3 of the installation groove 63 at a position where the first and second side surface lips 53 and 54 in the groove bottom portion side come into close contact with the installation groove 63 (w3 < w4).

Therefore, due to the relationship w3 < w4 in spite of w1 = w2, the relationship w3 < w1 is established in the case that the magnitude of w2 is aligned with the magnitude of w4 (the magnitudes of w2 and w4 are set to w2 = w4). Accordingly, an inserting resistance for installing the gasket 51 to the installation groove 63 becomes large, the gasket 51 is hard to be installed to the installation groove 63, and there is a risk that the gasket 51 lifts up from the installation groove 63 after being installed since an elastic restoring force is generated in the first and second side surface lips 53 and 54 in the groove bottom portion side which collapse onto the groove opening portion side.

Further, in the case that the magnitude of w1 is aligned with the magnitude of w3 (the magnitude are set to w1 = w3) in order to solve these disadvantages, the relationship w2 < w4 is established. Therefore, since the third and fourth side surface lips 55 and 56 in the groove opening portion side do not touch the groove side surfaces 63b and 63c of the installation groove 63, a whole of the gasket 51 is inclined leftward or rightward within the installation groove 63, and there is a risk that a sealing performance is reduced.

### PRIOR ART DOCUMENT

### Patent Document

Patent Document 1: Japanese Unexamined Patent Publication No. 2008-281110 (Figs. 4 to 5)

US 2003/001343 A1 discloses a sealing structure according to the preamble of claim 1 and relates to flexible fluid-type seals for pipe joints A including a first, female pipe B (bell), a second, male pipe C (spigot), and a gasket D meant for sealing between the two pipes. With reference to Fig. 2A of US 2003/001343 A1, the gasket D comprises an elongate annular gasket body or web 10. An axial centerline 12 defines a plane of transverse symmetry of the gasket thereabout. The gasket body includes a base portion 14 and an oppositely disposed upper portion 16 having two protrusions 18 and 20 symmetrically disposed about centerline 12 with a recess 22 there between. The protrusions run longitudinally along the length of the gasket body 10 and extend outwardly, i.e., generally in the direction of the sealing force. The upper portion 16 also comprises transversely extending first and second wings or lips 24 and 26 which are symmetrically located about the centerline 12. A pair of optional sealing lips 13 and 15 on opposite sides of base portion 14 provides additional contact points to effect sealing.

### SUMMARY OF THE INVENTION

### Problem to be Solved by the Invention

The present invention is made by taking the points mentioned above into consideration, and an object of the present invention is to provide a sealing structure which can suppress as soon as possible generation of the disadvantages that the gasket is hard to be installed to the installation groove, the gasket lifts up from the installation groove after being installed, and the gasket is inclined within the installation groove, which have been seen in the prior art mentioned above.

### Means for Solving the Problem

The object is solved by the features defined in claim 1.

In order to achieve the object mentioned above, according to the present invention, there is provided a sealing structure in which a gasket is installed to an installation groove which is provided in one member of mutually facing two members, the gasket is brought into close contact with the other member, and a groove width of the installation groove is made wider little by little from a groove bottom portion toward a groove opening portion, wherein the gasket integrally has a gasket main body portion in which one end comes into close contact with the groove bottom surface of the installation groove and the other end comes into close contact with the other member in an installed state, a pair of first and second side surface lips which come into close contact with groove side surfaces of the installation groove in the vicinity of the groove bottom portion of the installation groove, and a pair of third and fourth side surface lips which come into close contact with the groove side surfaces of the installation groove in the vicinity of the groove opening portion of the installation groove, and the sealing structure is formed so as to satisfy a relationship w1 < w2 in conformity to w3 < w4, in which w1 is a gasket width in the first and second side surface lips in the groove bottom portion side, w2 is a gasket width in the third and fourth side surface lips in the groove opening portion side, w3 is a groove width of the installation groove at a position where the first and second side surface lips in the groove bottom portion side come into close contact with the installation groove, and w4 is a groove width of the installation groove at a position where the third and fourth side surface lips in the groove opening portion side come into close contact with the installation groove.

In the sealing structure according to the present invention provided with the structure mentioned above, the sealing structure is formed so that the gasket width w1 in the first and second side surface lips in the groove bottom portion side and the gasket width w2 in the third and fourth side surface lips in the groove opening portion side satisfy the relationship w1 < w2 in place of the relationship w1 = w2 in the prior art mentioned above. Further, the groove width w3 of the installation groove at the position where the first and second side surface lips in the groove bottom portion side come into close contact with the installation groove and the groove width w4 of the installation groove at the position where the third and fourth side surface lips in the groove opening portion side come into close contact with the installation groove are formed so as to satisfy the relationship w3 < w4.

Therefore, since the relationship satisfying both w1 < w2 and w3 < w4 is established, it is possible to make a dimensional difference between w3 and w1 in the case that the magnitude of w2 is aligned with the magnitude of w4 (in the case of setting the relationship w2 = w4) smaller in comparison with the prior art, and it is possible to make a dimensional difference between w4 and w2 in the case that the magnitude of w1 is aligned with the magnitude of w3 (in the case of setting the relationship w1 = w3) smaller in comparison with the prior art.

### Effect of the Invention

The present invention achieves the following effects.

In other words, in the present invention, since the dimensional relationship between the gasket width w1 in the first and second side surface lips in the groove bottom portion side and the gasket width w2 in the third and fourth side surface lips in the groove opening portion side is formed so as to satisfy the relationship w1 < w2 in conformity to the dimensional relationship w3 < w4 between the groove width w3 of the installation groove at the position where the first and second side surface lips in the groove bottom portion side come into close contact with the installation groove and the groove width w4 of the installation groove at the position where the third and fourth side surface lips in the groove opening portion side come into close contact with the installation groove, as mentioned above, it is possible to make the dimensional difference between the groove width w3 of the installation groove at the position where the first and second side surface lips in the groove bottom portion side come into close contact with the installation groove, and the gasket width w1 in the first and second side surface lips in the groove bottom portion side smaller in comparison with the prior art, in the case that the gasket width w2 in the third and fourth side surface lips in the groove opening portion side is aligned with the groove width w4 of the installation groove at the position where the third and fourth side surface lips in the groove opening portion side come into close contact with the installation groove (in the case of setting the relationship w2 = w4). Therefore, the gasket is more easily installed to the installation groove at this degree, and it is possible to inhibit the gasket from lifting up from the installation groove after being installed. Further, it is possible to make the dimensional difference between the groove width w4 of the installation groove at the position where the third and fourth side surface lips in the groove opening portion side come into close contact with the installation groove, and the gasket width w2 in the third and fourth side surface lips in the groove opening portion side smaller in comparison with the prior art, in the case that the gasket width w1 in the first and second side surface lips in the groove bottom portion side is aligned with the groove width w3 of the installation groove at the position where the first and second side surface lips in the groove bottom portion side come into close contact with the installation groove (in the case of setting the relationship w1 = w3). Therefore, it is possible to inhibit the gasket from being inclined within the installation groove at this degree.

### BRIEF EXPLANATION OF THE DRAWINGS

Fig. 1 is a cross sectional view of a sealing structure according to an embodiment of the present invention;
Fig. 2 is a cross sectional view of a sealing structure according to a comparative example; and
Fig. 3 is a cross sectional view of a sealing structure according to a conventional example (prior art).

### Description of Reference Numerals

1 gasket
2 gasket main body portion
2a one end
2b other end
3 first side surface lip
4 second side surface lip
5 third side surface lip
6 fourth side surface lip
7, 8 concave surface
11 one member
12 other member
13 installation groove
13a groove bottom surface
13b, 13c groove side surface
13d, 13e convex surface

### DETAILED DESCRIPTION OF PREFERRED EMBODIMENT

The following embodiments are included in the present invention.

In order to achieve the object mentioned above, in the present invention, transverse widths of two upper and lower lips are set in conformity to taper angles of the other groove walls. By setting so that a width of a lower lip is aligned with a taper in the vicinity of a groove bottom, it is possible to solve a problem that a gasket is hard to be inserted due to preceding contact of the lower lip with a groove wall when the gasket is inserted, and a phenomenon that the lower lip lifts up. Further, by setting so that an upper lip is aligned with a width of a groove opening side, it is possible to effectively prevent the gasket from being collapsed under use.

### Embodiment

Next, a description will be given of an embodiment according to the present invention with reference to the accompanying drawings.

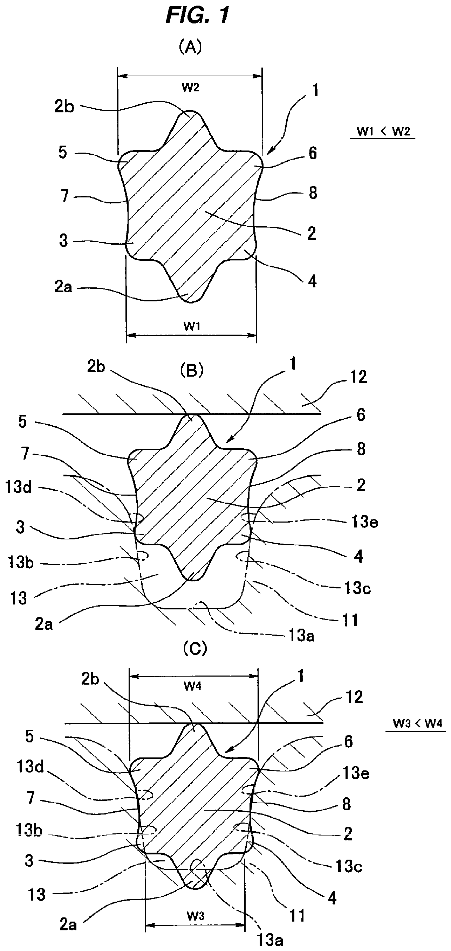

Fig. 1 shows a sealing structure according to an embodiment of the present invention. In other words, Fig. 1A is a cross sectional view of a gasket single body, Fig. 1B is a cross sectional view in the case that a gasket installing work is started (before press insertion), and Fig. 1C is a cross sectional view in the case that the gasket installing work is finished (after press insertion). The sealing structure according to the embodiment is structured such that a gasket 1 is installed to an installation groove 13 provided in one member 11 of mutually facing two members 11 and 12, and the gasket 1 is brought into close contact with the other member 12, and is structured as follows.

### Structure of Gasket

The gasket 1 is constructed by a predetermined rubber-like elastic body, and is provided with a gasket main body portion 2. The gasket main body portion 2 is provided with such a shape that one end (a lower end) 2a in a height direction in an installed state comes into close contact with a groove bottom surface 13a of the installation groove 13 and the other end (an upper end) 2b in the height direction comes into close contact with the other member 12. Further, a pair of (a pair of right and left) first and second side surface lips 3 and 4 are integrally formed in a side surface of the gasket main body portion 2, the first and second side surface lips 3 and 4 coming into close contact with groove side surfaces 13b and 13c of the installation groove 13 in the vicinity of a groove bottom portion of the installation groove 13. In the same manner, a pair of (a pair of right and left) third and fourth side surface lips 5 and 6 are integrally formed in the side surface of the gasket main body portion 2, the third and fourth side surface lips 5 and 6 coming into close contact with the groove side surfaces 13b and 13c of the installation groove 13 in the vicinity of a groove opening portion of the installation groove 13. The gasket 1 is formed as a line symmetrical shape (a bilaterally symmetrical shape) around a center line in its width direction. A dimensional relationship will be mentioned later.

Since each of the one end (the lower end) 2a and the other end (the upper end) 2b of the gasket main body portion 2 is formed as a lip shape, the gasket 1 is constructed as follows on the assumption that these ends are independent constructing elements from the gasket main body portion 2.

In other words, the gasket 1 is constructed by a predetermined rubber-like elastic body, and is provided with the gasket main body portion 2. The gasket main body portion 2 is formed as a rectangular shape in a cross section. Further, the first end surface lip 2a coming into close contact with the groove bottom surface 13a of the installation groove 13 is integrally formed in the one end surface (the lower end surface) in the height direction of the gasket main body portion 2, and the second end surface lip 2b coming into close contact with the other member 12 is integrally formed in the other end surface (the upper end surface) in the height direction. Further, a pair of (a pair of right and left) first and second side surface lips 3 and 4 are integrally formed in the side surface of the gasket main body portion 2, the first and second side surface lips 3 and 4 coming into close contact with the groove side surfaces 13b and 13c of the installation groove 13 in the vicinity of the groove bottom portion of the installation groove 13. In the same manner, a pair of (a pair of right and left) third and fourth side surface lips 5 and 6 are integrally formed in the side surface of the gasket main body portion 2, the third and fourth side surface lips 5 and 6 coming into close contact with the groove side surfaces 13b and 13c of the installation groove 13 in the vicinity of the groove opening portion of the installation groove 13. The gasket 1 is set to the line symmetrical shape (the bilaterally symmetrical shape) around the center line in its width direction.

### Structure of Installation Groove

The installation groove 13 is formed in a facing surface to the other member 12 in the one member 11 according to a press work or a casting process. Further, as a characteristic obtained by these working methods, the installation groove 13 is formed so that a groove width becomes wider little by little from the groove bottom portion toward the groove opening portion, and each of corner portions thereof (an internal corner portion in a far end of the groove bottom and an external corner portion in a peripheral edge of the groove opening) is rounded as a circular arc shape in a cross section.

### Dimensional Relationship

As mentioned above, since the installation groove 13 is formed so that the groove width becomes wider little by little from the groove bottom portion toward the groove opening portion, a groove width w4 of the installation groove 13 is set to be larger than a groove width w3 of the installation groove 13, in which the groove width w4 is a width of the installation groove 13 at a position where the third and fourth side surface lips 5 and 6 in the groove opening portion side of the gasket 1 come into close contact with the installation groove 13, and the groove width w3 is a width of the installation groove at a position where the first and second side surface lips 3 and 4 in the groove bottom portion side of the gasket 1 comes into close contact with the installation groove 13. In other words, a relationship w3 < w4 is set. On the other hand, a gasket width w2 (for example, w2 = 4.8 mm) is set to be larger than a gasket width w1 (for example, w1 = 4.3 mm), in which the gasket width w2 is a width of the gasket in the third and fourth side surface lips 5 and 6 in the groove opening portion side in the gasket 1, and the gasket width w1 is a width of the gasket in the first and second side surface lips 3 and 4 in the groove bottom portion side. In other words, a relationship w1 < w2 is set. Therefore, the widths are set so as to satisfy the relationship w3 < w4 and w1 < w2.

### Dimensional Relationship in Comparative Example

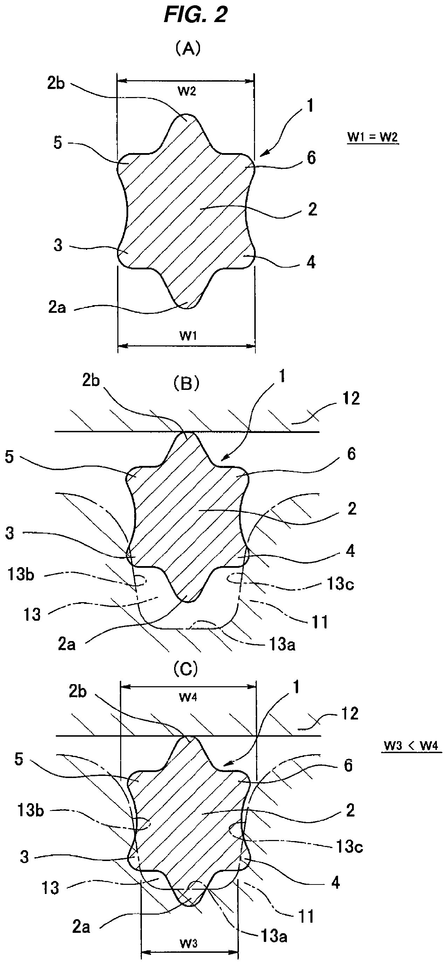

On the contrary, in a comparative example shown in Fig. 2, the groove width w4 of the installation groove 13 is set to be larger than the groove width w3 of the installation groove 13, in which the groove width w4 is the width of the installation groove 13 at the position where the third and fourth side surface lips 5 and 6 in the groove opening portion side of the gasket 1 come into close contact with the installation groove 13, and the groove width w3 is the width of the installation groove 13 at the position where the first and second side surface lips 3 and 4 in the groove bottom portion side of the gasket 1 come into close contact with the installation groove, however, the gasket width w2 (for example, w2 = 4.5 mm) is set to be equal to the gasket width w1 (for example, 4.5 mm), in which the gasket width w2 is the width of the gasket in the third and fourth side surface lips 5 and 6 in the groove opening portion side in the gasket 1, and the gasket width w1 is the width of the gasket in the first and second side surface lips 3 and 4 in the groove bottom portion side. Therefore, the widths are set so as to satisfy the relationship w3 < w4 and w1 = w2.

The dimensional relationship in the comparative example shown in Fig. 2 is the same as the dimensional relationship in the prior art shown in Fig. 3. Therefore, due to the relationships w3 < w4 and w1 = w2 as mentioned above, the relationship w3 < w1 is established in the case that the magnitude of w2 is aligned with the magnitude of w4 (the magnitudes of w2 and w4 are set to w2 = w4). Accordingly, the inserting resistance for installing the gasket 1 to the installation groove 13 becomes large, the gasket 1 is hard to be installed to the installation groove 13, and there is a risk that the gasket 1 lifts up from the installation groove 13 after being installed.

Further, in the case that the magnitude of w1 is aligned with the magnitude of w3 (the magnitude are set to w1 = w3) on the contrary in order to solve these disadvantages, the relationship w2 < w4 is established. Therefore, since the third and fourth side surface lips 5 and 6 in the groove opening portion side do not touch the groove side surfaces 13b and 13c of the installation groove 13, a whole of the gasket 1 is inclined leftward or rightward within the installation groove 13, and there is a risk that a sealing performance is reduced.

On the contrary, the embodiment is formed as mentioned above so that the dimensional relationship between the gasket width w1 in the first and second side surface lips 3 and 4 in the groove bottom portion side and the gasket width w2 in the third and fourth side surface lips 5 and 6 in the groove opening portion side satisfies the relationship w1 < w2, in conformity to the dimensional relationship w3 < w4 between the groove width w3 of the installation groove 13 at the position where the first and second side surface lips 3 and 4 in the groove bottom portion side come into close contact with the installation groove 13, and the groove width w4 of the installation groove 13 at the position where the third and fourth side surface lips 5 and 6 in the groove opening portion side come into close contact with the installation groove 13. Accordingly, in the case that the gasket width w2 in the third and fourth side surface lips 5 and 6 in the groove opening portion side is aligned with the groove width w4 of the installation groove 13 at the position where the third and fourth side surface lips 5 and 6 in the groove opening portion side come into close contact with the installation groove 13 (the relationship w2 = w4 is set), the dimensional difference becomes smaller in comparison with the comparative example, the dimensional difference being a dimensional difference between the groove width w3 of the installation groove 13 at the position where the first and second side surface lips 3 and 4 in the groove bottom portion side come into close contact with the installation groove 13, and the gasket width w1 in the first and second side surface lips 3 and 4 in the groove bottom portion side. Therefore, since the inserting resistance at the time of installing the gasket 1 to the installation groove 13 becomes smaller accordingly, the gasket 1 is easily installed to the installation groove 13, and the first and second side surface lips 3 and 4 in the groove bottom portion side do not collapse onto the groove opening side. Accordingly, it is possible to inhibit the gasket 1 from lifting up from the installation groove 13.

Further, in the case that the gasket width w1 in the first and second side surface lips 3 and 4 in the groove bottom portion side is aligned with the groove width w3 of the installation groove 13 at the position where the first and second side surface lips 3 and 4 in the groove bottom portion side come into close contact with the installation groove 13 (the relationship w1 = w3 is set), the dimensional difference becomes smaller in comparison with the prior art, the dimensional difference being a dimensional difference between the groove width w4 of the installation groove 13 at the position where the third and fourth side surface lips 5 and 6 in the groove opening portion side come into close contact with the installation groove 13, and the gasket width w2 in the third and fourth side surface lips 5 and 6 in the groove opening portion side. Therefore, since the third and fourth side surface lips 5 and 6 in the groove opening portion side easily reach the groove side surfaces 13b and 13c of the installation groove 13 accordingly, it is possible to inhibit the gasket 1 from being inclined within the installation groove 13.

In the drawings, the gasket width w1 in the first and second side surface lips 3 and 4 in the groove bottom portion side is set to be somewhat larger than the groove width w3 of the installation groove 13 at the position where the first and second side surface lips 3 and 4 in the groove bottom portion side come into close contact with the installation groove 13 (w1 > w3). Accordingly, a predetermined collapsing margin is set, and a sufficient sealing performance is secured. Further, the gasket width w2 in the third and fourth side surface lips 5 and 6 in the groove opening portion side is set to be approximately equal to the groove width w4 of the installation groove 13 at the position where the third and fourth side surface lips 5 and 6 in the groove opening portion side come into close contact with the installation groove 13 (w2 ≈ w4). Accordingly, the incline of the gasket 1 within the installation groove 13 is suppressed.

Further, in the embodiment, in the cross sectional shape of the gasket 1, a concave surface 7 formed between the first side surface lip 3 and the third side surface lip 5 is formed as a circular arc shape in a cross section, and a fixed curvature is set here. Further, a convex surface 13d having a circular arc cross sectional shape is formed in the side surface 13b of the installation groove 13 with which the concave surface 7 comes into contact in the installed state, and a curvature of the convex surface 13d is set to be approximately equal to the curvature of the concave surface 7. Further, a concave surface 8 is formed as a circular arc shape in a cross section between the second side surface lip 4 and the fourth side surface lip 6 in the opposite side, and a fixed curvature is set here. Further, a convex surface 13e having a circular arc cross sectional shape is formed in the side surface 13c of the installation groove 13 with which the concave surface 8 comes into contact in the installed state, and a curvature of the convex surface 13e is set to be approximately equal to the curvature of the concave surface 8. Therefore, since the side surface shape of the gasket 1 is set along the lines of the side surface shape of the installation groove 13, and the gasket 1 comes into contact with the inner surface of the installation groove 13 firmly over a wide area, the installed posture of the gasket 1 is extremely stable.

## Claims

1. A sealing structure comprising a gasket and two mutually facing members, wherein said gasket (1) is installed to an installation groove (13) which is provided in one member (11) of said mutually facing two members (11, 12), said gasket is brought into close contact with the other member (12), and a groove width of said installation groove is made wider little by little from a groove bottom portion toward a groove opening portion,
wherein said gasket integrally has a gasket main body portion (2) in which, in an installed state, one end comes into close contact with the groove bottom surface (13a) of said installation groove and the other end comes into close contact with said other member (12), a pair of first and second side surface lips (3, 4) come into close contact with groove side surfaces (13b, 13c) of said installation groove in the vicinity of the groove bottom portion of said installation groove, and a pair of third and fourth side surface lips (15, 16) come into close contact with the groove side surfaces of said installation groove in the vicinity of the groove opening portion of said installation groove,
wherein said gasket is formed as a line symmetrical shape around a center line in its width direction,
wherein said sealing structure is formed so as to satisfy a relationship w1<w2 in conformity to w3<w4, in which w1 is a gasket width in the first and second side surface lips (3, 4) in said groove bottom portion side before being installed, w2 is a gasket width in the third and fourth side surface lips (5, 6) in said groove opening portion side before being installed, w3 is a groove width of said installation groove at a position where the first and second side surface lips in said groove bottom portion side come into close contact with the installation groove, and w4 is a groove width of said installation groove at a position where the third and fourth side surface lips in said groove opening portion side come into close contact with the installation groove, and
wherein the gasket width w1 in the first and second side surface lips (3, 4) in said groove bottom position side is set to be somewhat larger than the groove width w3 of the installation groove (13) so as to satisfy the relationship w1 > w3 so that in an installed state the first and second side surface lips in said groove bottom portion side come into close contact with the groove side surface of said installation groove in a state in which a collapsing margin is set, without collapsing onto the groove opening side of said installation groove, and
the gasket width w2 in the third and fourth side surface lips (5, 6) in said groove opening portion side is set to be approximately equal to the groove width w4 of said installation groove at the position where the third and fourth side surface lips in said groove opening portion side come into close contact with the installation groove, **characterised in that** a concave surface (7) having a circular arc cross sectional shape is formed between said first side surface lip (3) and said third side surface lip (5) before being installed, a convex surface having a circular arc cross sectional shape is formed in the side surface (13d) of said installation groove with which said concave surface comes into contact in an installed state, and a curvature of said convex surface is set to be approximately equal to a curvature of said concave surface, and **in that** a concave surface (8) having a circular arc cross sectional shape is formed between said second side surface lip (4) and said fourth side surface lip (6) before being installed, a convex surface having a circular arc cross sectional shape is formed in the side surface (13e) of said installation groove with which said concave surface comes into contact in an installed state, and a curvature of said convex surface is set to be approximately equal to a curvature of said concave surface.

## Patentansprüche

1. Dichtungsstruktur mit einer Dichtung und zwei einander zugewandten Elementen, wobei die Dichtung (1) in eine Installationsnut (13) eingebaut ist, die in einem Element (11) von den zwei einander zugewandten Elementen (11, 12) vorgesehen ist, wobei die Dichtung in engen Kontakt mit dem anderen Element (12) gebracht ist, und wobei eine Nutbreite der Installationsnut nach und nach von einem Nutbodenabschnitt zu einem Nutöffnungsabschnitt breiter gemacht ist,
wobei die Dichtung integral einen Dichtungshauptkörperabschnitt (2) aufweist, in welchem, im eingebauten Zustand, ein Ende in engen Kontakt mit der Nutbodenfläche (13a) der Installationsnut kommt und das andere Ende in engen Kontakt mit dem anderen Element (12) kommt,
wobei ein Paar von ersten und zweiten Seitenflächenlippen (3, 4) in engen Kontakt mit den Nutseitenflächen (13b, 13c) der Installationsnut in der Nähe des Nutbodenabschnitts der Installationsnut kommt und ein Paar von dritten und vierten Seitenflächenlippen (15, 16) in engen Kontakt mit den Nutseitenflächen der Installationsnut in der Nähe des Nutöffnungsabschnitts der Installationsnut kommt,
wobei die Dichtung als eine liniensymmetrische Form um eine Mittellinie in ihrer Breitenrichtung ausgebildet ist,
wobei die Dichtungsstruktur so ausgebildet ist, dass sie eine Beziehung w1<w2 in Übereinstimmung mit w3<w4 erfüllt, wobei w1 eine Dichtungsbreite in der ersten und der zweiten Seitenflächenlippe (3, 4) auf der Nutbodenabschnittsseite vor dem Einbau ist, w2 eine Dichtungsbreite in der dritten und vierten Seitenflächenlippe (5, 6) auf der Nutöffnungsabschnittsseite vor dem Einbau ist, w3 eine Nutbreite der Installationsnut an einer Position ist, wo die erste und die zweite Seitenflächenlippe auf der Nutbodenabschnittsseite in engen Kontakt mit der Installationsnut kommen und w4 eine Nutbreite der Installationsnut an einer Position ist, wo die dritte und vierte Seitenflächenlippe auf der Nutöffnungsabschnittsseite in engen Kontakt mit der Installationsnut kommen, und
wobei die Dichtungsbreite w1 der ersten und zweiten Seitenflächenlippe (3, 4) auf der Nutbodenpositionsseite etwas größer eingestellt ist als die Nutbreite w3 der Installationsnut (13), um die Beziehung w1>w3 zu erfüllen, so dass in einem eingebauten Zustand die erste und die zweite Seitenflächenlippe auf der Nutbodenabschnittsseite in engen Kontakt mit der Nutseitenfläche der Installationsnut in einem Zustand kommen, in dem ein kollabierender Rand eingestellt ist, ohne auf die Nutöffnungsseite der Installationsnut zu kollabieren, und
die Dichtungsbreite w2 der dritten und vierten Seitenflächenlippe (5, 6) auf der Nutöffnungsabschnittsseite so eingestellt ist, dass sie ungefähr gleich der Nutbreite w4 der Installationsnut an der Position ist, an der die dritte und vierte Seitenflächenlippe auf der Nutöffnungsabschnittsseite in engen Kontakt mit der Installationsnut kommen,
**dadurch gekennzeichnet, dass**
vor dem Einbau eine konkave Fläche (7) mit einer kreisbogenförmigen Querschnittsform zwischen der ersten Seitenflächenlippe (3) und der dritten Seitenflächenlippe (5) gebildet ist, eine konvexe Fläche mit einer kreisbogenförmigen Querschnittsform auf der Seitenfläche (13d) der Installationsnut ausgebildet ist, mit der die konkave Fläche im eingebauten Zustand in Kontakt kommt, und eine Krümmung der konvexen Fläche so eingestellt ist, dass sie annähernd gleich einer Krümmung der konkaven Fläche ist, und
dass vor dem Einbau eine konkave Fläche (8) mit einer kreisbogenförmigen Querschnittsform zwischen der zweiten Seitenflächenlippe (4) und der vierten Seitenflächenlippe (6) gebildet ist, eine konvexe Fläche mit einer kreisbogenförmigen Querschnittsform auf der Seitenfläche (13e) der Installationsnut ausgebildet ist, mit der die konkave Fläche in einem eingebauten Zustand in Kontakt kommt, und eine Krümmung der konvexen Fläche so eingestellt ist, dass sie ungefähr gleich einer Krümmung der konkaven Fläche ist.

## Revendications

1. Structure d'étanchéité comprenant un joint et deux éléments se faisant mutuellement face, dans laquelle ledit joint (1) est installé sur une rainure d'installation (13) qui est prévue dans un élément (11) desdits deux éléments se faisant mutuellement face (11, 12), ledit joint est amené en contact immédiat avec l'autre élément (12), et une largeur de rainure de ladite rainure d'installation devient petit à petit plus large, d'une partie de fond de rainure vers une partie d'ouverture de rainure,
dans laquelle ledit joint a, de manière solidaire, une partie de corps principal de joint (2) dans laquelle, dans un état installé, une extrémité vient en contact immédiat avec la surface de fond de rainure (13a) de ladite rainure d'installation et l'autre extrémité vient en contact immédiat avec ledit autre élément (12),
une paire de première et deuxième lèvres de surface latérales (3, 4) viennent en contact immédiat avec les surfaces latérales de rainure (13b, 13c) de ladite rainure d'installation à proximité de la partie de fond de rainure de ladite rainure d'installation, et une paire de troisième et quatrième lèvres de surface latérales (15, 16) viennent en contact immédiat avec les surfaces latérales de rainure de ladite rainure d'installation à proximité de la partie d'ouverture de rainure de ladite rainure d'installation,
dans laquelle ledit joint est formé selon une forme symétrique linéaire autour d'une ligne centrale dans le sens de sa largeur,
dans laquelle ladite structure d'étanchéité est formée afin de satisfaire une relation w1 < w2 en conformité avec w3 < w4, dans laquelle w1 est une largeur de joint dans les première et deuxième lèvres de surface latérales (3, 4) du côté de ladite partie de fond de rainure avant l'installation, w2 est une largeur de joint dans les troisième et quatrième lèvres de surface latérales (5, 6) du côté de ladite partie d'ouverture avant l'installation, w3 est une largeur de rainure de ladite rainure d'installation dans une position dans laquelle les première et deuxième lèvres de surface latérales du côté de ladite partie de fond de rainure viennent en contact immédiat avec la rainure d'installation, et w4 est une largeur de rainure de ladite rainure d'installation dans une position dans laquelle les troisième et quatrième lèvres de surface latérales du côté de ladite partie d'ouverture de rainure viennent en contact immédiat avec la rainure d'installation, et
dans laquelle la largeur de rainure w1 dans les première et deuxième lèvres de surface latérales (3, 4) du côté de ladite position de fond de rainure est déterminée pour être légèrement plus grande que la largeur de rainure w3 de la rainure d'installation (13) afin de satisfaire la relation w1 > w3 de sorte que, dans un état installé, les première et deuxième lèvres de surface latérales du côté de ladite partie de fond de rainure viennent en contact immédiat avec la surface latérale de rainure de ladite rainure d'installation, dans un état dans lequel une marge de chevauchement est déterminée, sans chevaucher du côté de l'ouverture de rainure de ladite rainure d'installation, et
la largeur de joint w2 dans les troisième et quatrième lèvres de surface latérales (5, 6) du côté de ladite partie d'ouverture de rainure est déterminée pour être approximativement égale à la largeur de rainure w4 de ladite rainure d'installation dans la position dans laquelle les troisième et quatrième lèvres de surface latérales du côté de ladite partie d'ouverture de rainure viennent en contact immédiat avec la rainure d'installation, **caractérisée en ce que** :
une surface concave (7) ayant une forme transversale d'arc circulaire est formée entre ladite première lèvre de surface latérale (3) et ladite troisième lèvre de surface latérale (5) avant l'installation,
une surface convexe ayant une forme transversale d'arc circulaire est formée dans la surface latérale (13d) de ladite rainure d'installation avec laquelle ladite surface concave vient en contact dans un état installé, et une courbure de ladite surface convexe est déterminée pour être approximativement égale à une courbure de ladite surface concave, et
**en ce qu'**une surface concave (8) ayant une forme transversale d'arc circulaire est formée entre ladite deuxième lèvre de surface latérale (4) et ladite quatrième lèvre de surface latérale (6) avant l'installation,
une surface convexe ayant une forme transversale d'arc circulaire est formée dans la surface latérale (13e) de ladite rainure d'installation avec laquelle ladite surface concave vient en contact dans un état installé, et une courbure de ladite surface convexe est déterminée pour être approximativement égale à une courbure de ladite surface concave.
